# EUROPEAN PATENT APPLICATION

(11) **EP 4 152 777 A1**
(43) Date of publication of application: **22.03.2023**
(21) Application number: 21826591.6
(22) Date of filing: 19.04.2021
(51) Int. Cl.: H04W 4/02, H04W 4/029

(54) **POSITIONING METHOD, EDGE COMPUTING PLATFORM, POSITIONING PLATFORM, AND COMPUTER READABLE MEDIUM**

(30) Priority: 19.06.2020 CN 202010567478
(71) Applicant: ZTE Corporation, Shenzhen, Guangdong 518057 (CN)
(72) Inventor: HE, Shenghong, Shenzhen, Guangdong 518057 (CN)
(74) Representative: Canzler & Bergmeier Patentanwälte Partnerschaft mbB
(86) International application number: PCT/CN2021/088085
(87) International publication number: WO 2021/253965

(57) **Abstract**

Provided by the present application is a positioning method, comprising: receiving a mobility positioning data reporting request, and data reporting trigger policy information corresponding to a positioning target is recorded in the mobility positioning data reporting request; determining, according to the data reporting trigger policy information, whether to trigger a mobility positioning data reporting operation; and if it is determined to trigger the mobility positioning data reporting operation, reporting positioning data of a positioned target. Further provided by the present application are an edge computing platform, a positioning platform, and a computer readable medium.

## Description

### TECHNICAL FIELD

The present disclosure relates to, but is not limited to, the technical field of communications.

### BACKGROUND

With the development and rapid evolution of communication technology, edge computing platforms have become more and more important. Communication and interaction between the edge computing platforms and corresponding positioning platforms are especially important in many application scenarios of the edge computing platforms. At present, transmission of positioning data between the edge computing platforms and the positioning platforms are mainly carried out in two modes, i.e., a single query response mode and a periodic report mode, and a corresponding standard of positioning data transmission interfaces defines two major types, i.e., position lookup interfaces and position subscription interfaces.

The position lookup interfaces are used in the single query response mode, that is, after receiving a single query about the positioning data, the edge computing platform reports the positioning data to the positioning platform for merely one time according to the current query and then will not actively release the positioning data to the positioning platform; and the position subscription interfaces are used for periodic and continuous reporting, and the edge computing platform reports the positioning data to the positioning platform according to an agreed period after the positioning platform subscribes to the edge computing platform for the positioning data.

### SUMMARY

The present disclosure provides a positioning method, an edge computing platform, a positioning platform, and a computer-readable medium.

In the first aspect, an embodiment of the present disclosure provides a positioning method, including: receiving a mobility positioning data report request, with data report trigger policy information corresponding to a positioning target recorded in the mobility positioning data report request; determining whether to trigger a mobility positioning data report behavior according to the data report trigger policy information; and if it is determined that the mobility positioning data report behavior is triggered, reporting positioning data of the positioning target.

In the second aspect, an embodiment of the present disclosure further provides a positioning method, including: configuring and generating a mobility positioning data report request, with data report trigger policy information corresponding to a positioning target recorded in the mobility positioning data report request; sending the mobility positioning data report request to an edge computing platform, so as to allow the edge computing platform to determine whether to trigger a mobility positioning data report behavior according to the data report trigger policy information, and report positioning data of the positioning target when it is determined that the mobility positioning data report behavior is triggered; and receiving the positioning data.

In the third aspect, an embodiment of the present disclosure provides an edge computing platform, including: one or more processors; and a storage device configured to store one or more programs. When executed by the one or more processors, the one or more programs cause the one or more processors to carry out the positioning method according to the first aspect.

In the fourth aspect, an embodiment of the present disclosure provides a computer-readable medium having a computer program stored thereon which, when executed by a processor, causes the processor to perform the operations of the positioning method according to the first aspect.

In the fifth aspect, an embodiment of the present disclosure provides a positioning platform, including: one or more processors; and a storage device configured to store one or more programs. When executed by the one or more processors, the one or more programs cause the one or more processors to carry out the positioning method according to the second aspect.

In the sixth aspect, an embodiment of the present disclosure provides a computer-readable medium having a computer program stored thereon which, when executed by a processor, causes the processor to perform the positioning method according to the second aspect.

### BRIEF DESCRIPTION OF DRAWINGS

FIG. 1 is a flowchart illustrating a positioning method according to an embodiment of the present disclosure;
FIG. 2 is another flowchart illustrating a positioning method according to an embodiment of the present disclosure;
FIG. 3 is still another flowchart illustrating a positioning method according to an embodiment of the present disclosure;
FIG. 4 is yet another flowchart illustrating a positioning method according to an embodiment of the present disclosure;
FIG. 5 is a flowchart illustrating an exemplary implementation of operation S201 according to an embodiment of the present disclosure;
FIG. 6 is yet another flowchart illustrating a positioning method according to an embodiment of the present disclosure;
FIG. 7 is a flowchart illustrating an exemplary implementation of operation S2 according to an embodiment of the present disclosure; and
FIG. 8 is yet another flowchart illustrating a positioning method according to an embodiment of the present disclosure.

### DETAIL DESCRIPTION OF EMBODIMENTS

In order to enable those of ordinary skill in the art to better understand the technical solutions of the present disclosure, the positioning methods, the edge computing platform, the positioning platform and the computer-readable media provided by the present disclosure are described in detail below with reference to the drawings.

Exemplary embodiments will be described more fully below with reference to the drawings, but the exemplary embodiments illustrated may be embodied in different forms, and should not be interpreted as being limited to the embodiments described herein. Rather, the embodiments are provided to make the present disclosure thorough and complete, and are intended to enable those of ordinary skill in the art to fully understand the scope of the present disclosure.

The terms used herein are merely used to describe specific embodiments, and are not intended to limit the present disclosure. The terms "one" and "the" used herein which indicate a singular form are intended to include a plural form, unless expressly stated in the context. It should be further understood that the terms "comprise" and "be made of' used herein indicate the presence of the described features, integers, operations, elements and/or components, but do not exclude the presence or addition of one or more other features, integers, operations, elements, components and/or combinations thereof.

It should be understood that the terms "first", "second" and the like may be used herein to describe various elements, but those elements are not limited by those terms. Those terms are merely used for distinguishing one element from the other element. Therefore, without departing from the teaching of the present disclosure, a first element, a first component, or a first module described below can also be called a second element, a second component, or a second module.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

As described above, the position lookup interfaces are used in the single query response mode, that is, after receiving the single query about the positioning data, the edge computing platform reports the positioning data to the positioning platform for merely one time according to the current query and then will not actively release the positioning data to the positioning platform, with the result that the positioning data acquired by the positioning platform is not sufficient and is poor in timeliness; and the position subscription interfaces are used for periodic and continuous reporting, and the edge computing platform reports the positioning data to the positioning platform according to the agreed period after the positioning platform subscribes to the edge computing platform for the positioning data, with the result that unnecessary bandwidth resources are consumed, causing waste of processing resources. Thus, the existing transmission modes of the positioning data of the edge computing platforms have the problem that the timeliness of the positioning data cannot be compatible with the resources of the platforms.

Therefore, the present disclosure provides a positioning method, an edge computing platform, a positioning platform, and a computer-readable medium, and substantially avoids one or more of the problems caused by disadvantages or limitations of the existing technology. The positioning method, the edge computing platform, the positioning platform, and the computer-readable medium provided by the present disclosure can be configured to report positioning data based on mobility of a positioning target and a corresponding trigger policy.

With the positioning method applied to an edge computing platform, the edge computing platform establishes a communication relationship with a positioning platform, and reports the positioning data of the positioning target to the positioning platform according to a corresponding positioning data transmission protocol. The positioning platform is a positioning application for providing a positioning service for an external object. In some embodiments, the edge computing platform adds a mobility report interface to a positioning data transmission interface standard applied between the edge computing platform and the positioning platform, and carries out the positioning method to call the interface to communicate with the positioning platform.

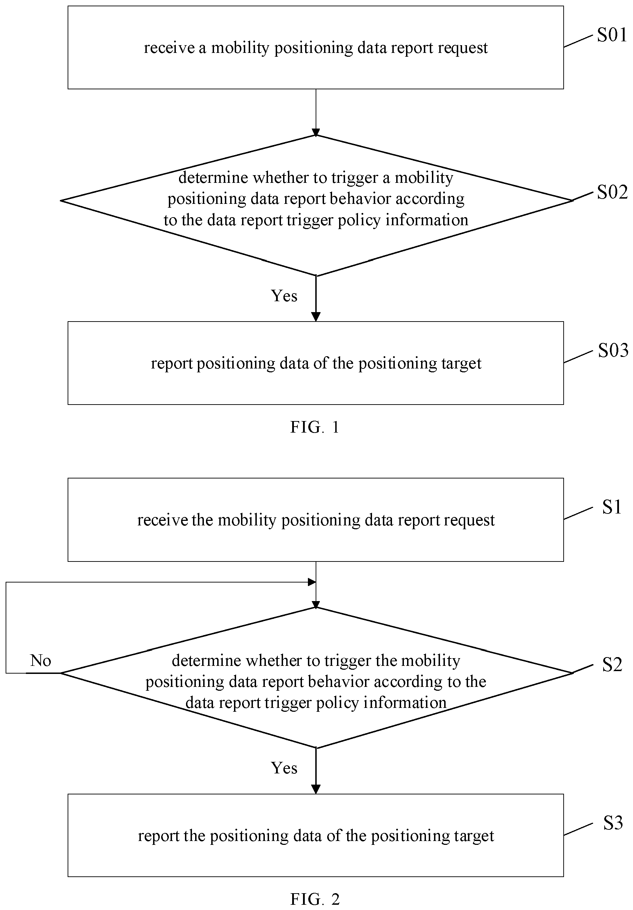

FIG. 1 is a flowchart illustrating a positioning method according to an embodiment of the present disclosure. As shown in FIG. 1, the positioning method is applied to an edge computing platform side (for example, the positioning method is performed by the edge computing platform), and includes operations S01 to S03.

In operation S01, a mobility positioning data report request is received.

Data report trigger policy information corresponding to a positioning target is recorded in the mobility positioning data report request, and the data report trigger policy information is configured to instruct an edge computing platform to report positioning data based on mobility of the positioning target. In some embodiments, the mobility positioning data report request is sent by a positioning platform, and the data report trigger policy information may be referred to as mobility report interface definition information.

In some embodiments, the mobility positioning data report request may further include a Uniform Resource Locator (URL) of the positioning platform for indicating an address where a positioning application receives the positioning data; the mobility positioning data report request may further include positioning coordinate system information, which may be recorded in the data report trigger policy information and configured to indicate a coordinate format of the positioning data, such as longitude and latitude coordinates or user-defined coordinates; and the mobility positioning data report request may further include identification information of the positioning target.

In operation S02, it is determined whether to trigger a mobility positioning data report behavior according to the data report trigger policy information.

The mobility positioning data report behavior is a positioning data report behavior based on the mobility of the positioning target, and therefore, determining whether to trigger the mobility positioning data report behavior according to the data report trigger policy information is determining whether to trigger the mobility positioning data report behavior according to whether the current mobility of the positioning target meets a corresponding trigger policy. In some embodiments, the mobility of the positioning target may be represented by a position and a speed of the positioning target, and a change of the mobility of the positioning target may be represented by a position change and a speed change. Thus, whether to trigger the mobility positioning data report behavior may be determined according to the position change and the speed change of the positioning target.

If it is determined that the mobility positioning data report behavior is triggered in the operation S02, operation S03 is performed. In some embodiments, before the operation S02, the method further includes: authenticating the mobility positioning data report request (the positioning platform which sends the request), and performing the operation S02 after the authentication is successful.

In operation S03, the positioning data of the positioning target is reported.

The reported positioning data is configured to describe positioning information of the positioning target, and when the positioning data is reported, the URL of the positioning platform, the data report trigger policy information and the identification information of the positioning target may be reported together with the positioning data for verification of safety and data correctness.

In some embodiments, after the positioning data of the positioning target is reported, the operation S02, i.e., the operation of determining whether to trigger the mobility positioning data report behavior according to the data report trigger policy information, is performed again.

FIG. 2 is another flowchart illustrating a positioning method according to an embodiment of the present disclosure. The method is an exemplary implementation based on the method illustrated by FIG. 1. As shown in FIG. 2, the method includes operations S1 to S3.

In operation S1, the mobility positioning data report request is received.

In operation S2, it is determined whether to trigger the mobility positioning data report behavior according to the data report trigger policy information.

In the operation S2, if it is determined that the mobility positioning data report behavior is triggered, the operation S3 is performed; and if determining whether to trigger the mobility positioning data report behavior fails, the positioning target is continuously subjected to mobility monitoring until it is determined that the mobility positioning data report behavior is triggered, and then the operation S3 is performed.

In operation S3, the positioning data of the positioning target is reported.

The positioning method provided by the embodiment of the present disclosure can be used to determine whether to trigger the mobility positioning data report behavior according to the data report trigger policy information, and accordingly report the positioning data of the positioning target when the mobility of the positioning target meets the corresponding trigger policy, thereby realizing reasonable utilization of bandwidth resources and processing resources while ensuring sufficiency and timeliness of the positioning data, and allowing data timeliness to be compatible with platform resources.

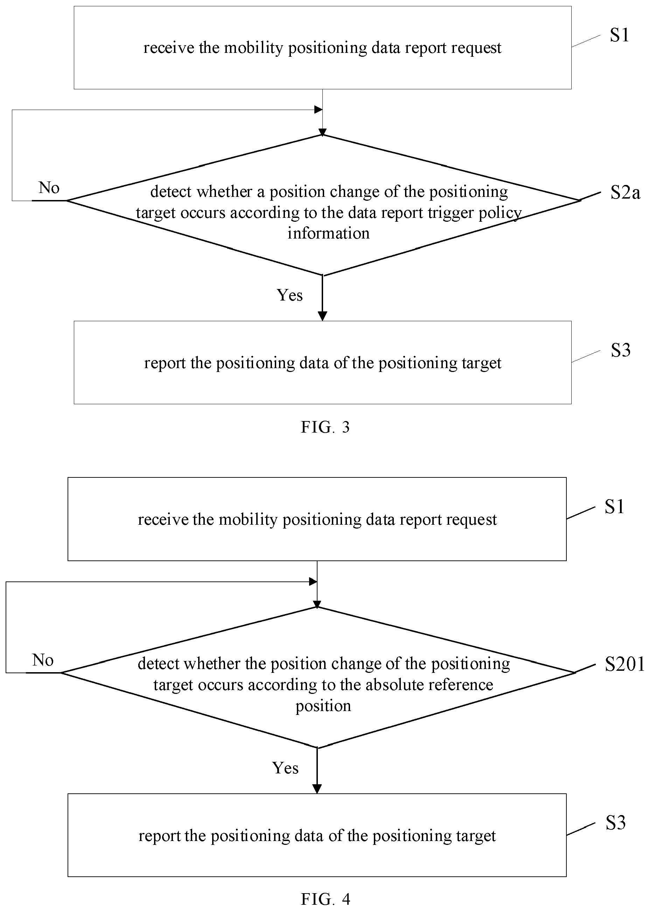

FIG. 3 is still another flowchart illustrating a positioning method according to an embodiment of the present disclosure. The method is an exemplary implementation based on the method illustrated by FIG. 2. As shown in FIG. 3, illustratively, the operation S2 of determining whether to trigger the mobility positioning data report behavior according to the data report trigger policy information includes: operation S2a, detecting whether a position change of the positioning target occurs according to the data report trigger policy information.

In the operation S2a, if it is detected that the position change of the positioning target occurs, it is determined that the mobility positioning data report behavior is triggered, and then the operation S3 is performed; and if it is detected that no position change of the positioning target occurs, a state of the position change of the positioning target is continuously monitored until it is detected that the position change of the positioning target occurs, it is determined accordingly that the mobility positioning data report behavior is triggered, and then the operation S3 is performed.

FIG. 4 is yet another flowchart illustrating a positioning method according to an embodiment of the present disclosure. The method is an exemplary implementation based on the method illustrated by FIG. 3. Illustratively, the data report trigger policy information includes a reference position and a position change type, the reference position includes an absolute reference position of the positioning target, and the position change type includes an absolute position change type; and as shown in FIG. 4, the operation S2a of detecting whether the position change of the positioning target occurs according to the data report trigger policy information includes: operation S201, detecting whether the position change of the positioning target occurs according to the absolute reference position.

The absolute reference position is assigned or acquired by the positioning platform.

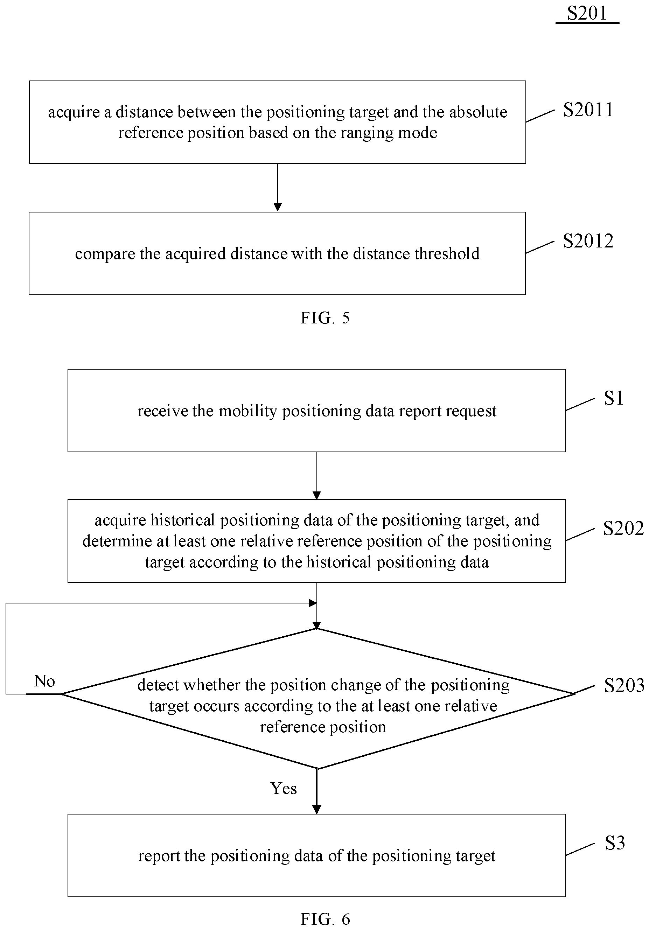

FIG. 5 is a flowchart illustrating an exemplary implementation of the operation S201 according to an embodiment of the present disclosure. Further, the data report trigger policy information further includes a position change measurement mode and a report trigger threshold, the position change measurement mode includes a ranging mode, and the report trigger threshold includes: a distance threshold; and as shown in FIG. 5, the operation S201 of detecting whether the position change of the positioning target occurs according to the absolute reference position includes operations S2011 and S2012.

In operation S2011, a distance between the positioning target and the absolute reference position is acquired based on the ranging mode.

The distance may be calculated by positioning and monitoring the positioning target in real time, for example, when a positioning coordinate system is a longitude and latitude coordinate system, the distance may be calculated according to longitudes, latitudes and heights of the positioning target and the absolute reference position; and when the positioning coordinate system is a user-defined coordinate system, the distance may be calculated according to coordinate values of coordinate positions of the positioning target and the absolute reference position.

In operation S2012, the acquired distance is compared with the distance threshold.

In the operation S2012, if the acquired distance is greater than or equal to the distance threshold, it is detected that the position change of the positioning target occurs; and if the acquired distance is less than the distance threshold, it is detected that no position change of the positioning target occurs.

The positioning method provided by the embodiment of the present disclosure can be used to determine whether the position change of the positioning target occurs according to the distance between the positioning target and the absolute reference position, and determine whether to report the positioning data of the positioning target according to the position change of the positioning target, thereby realizing the reasonable utilization of the bandwidth resources and the processing resources while ensuring the sufficiency and the timeliness of the positioning data, and allowing the data timeliness to be compatible with the platform resources.

FIG. 6 is yet another flowchart illustrating a positioning method according to an embodiment of the present disclosure. The method is an exemplary implementation based on the method illustrated by FIG. 3. Illustratively, the data report trigger policy information includes a position change type including a relative position change type; and as shown in FIG. 6, the operation S2a of detecting whether the position change of the positioning target occurs according to the data report trigger policy information includes operations S202 and S203.

In operation S202, historical positioning data of the positioning target is acquired, and at least one relative reference position of the positioning target is determined according to the historical positioning data.

Unlike the absolute reference position, the relative reference position is determined by selecting, by the edge computing platform, one or more positioned positions from the historical positioning data according to the historical positioning data of the positioning target.

In operation S203, it is detected whether the position change of the positioning target occurs according to the at least one relative reference position.

In some embodiments, similar to the operation S201 of detecting whether the position change of the positioning target occurs according to the absolute reference position, the data report trigger policy information further includes a position change measurement mode and a report trigger threshold, the position change measurement mode includes a ranging mode, and the report trigger threshold includes a distance threshold; and the operation S203 of detecting whether the position change of the positioning target occurs according to the at least one relative reference position includes: acquiring a distance between the positioning target and each relative reference position based on the ranging mode; comparing each acquired distance with the distance threshold; and if any acquired distance is greater than or equal to the distance threshold, it is detected that the position change of the positioning target occurs, and if each of the acquired distances is less than the distance threshold, it is detected that no position change of the positioning target occurs.

When merely one relative reference position exists, the distance between the positioning target and such relative reference position is compared with the distance threshold; when a plurality of relative reference positions exist, a plurality of the acquired distances are respectively compared with the distance threshold, and no position change of the positioning target occurs when all of the distances between the positioning target and the plurality of relative reference positions are less than the distance threshold. The method may be applied to a scenario when the positioning target is an object moving within a certain range, such as goods which are movably displayed, goods which are loaded or unloaded, goods which can be tried out or tried on, or the positioning target restricted to move within an irregular shaped range.

The positioning method provided by the embodiment of the present disclosure can be used to determine whether the position change of the positioning target occurs according to the distance between the positioning target and the single relative reference position or the distances between the positioning target and the plurality of relative reference positions, and determine whether to report the positioning data of the positioning target according to the position change of the positioning target, thereby improving accuracy of the determination of the position change.

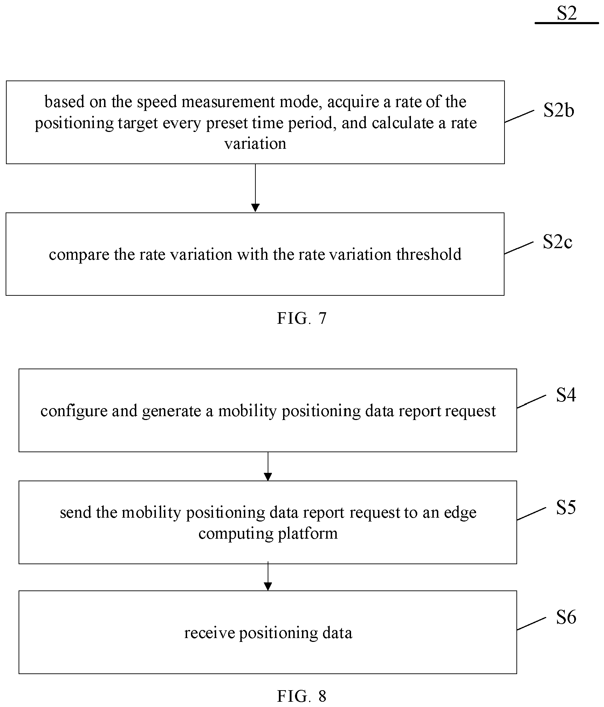

FIG. 7 is a flowchart illustrating an exemplary implementation of the operation S2 according to an embodiment of the present disclosure. Illustratively, the data report trigger policy information includes a trigger measurement mode and a report trigger threshold, the trigger measurement mode includes a speed measurement mode, and the report trigger threshold includes a rate variation threshold; and as shown in FIG. 7, the operation S2 of determining whether to trigger the mobility positioning data report behavior according to the data report trigger policy information includes operations S2b and S2c.

In operation S2b, based on the speed measurement mode, a rate of the positioning target is acquired every preset time period, and a rate variation is calculated.

The rate variation may be calculated by subtracting a rate at an initial moment of the preset time period from a rate at an end moment of the preset time period and taking an absolute value. In some embodiments, an acceleration of the positioning target may be calculated through vectors for determining whether to trigger the mobility positioning data report behavior.

In operation S2c, the rate variation is compared with the rate variation threshold.

In the operation S2c, if the rate variation is greater than or equal to the rate variation threshold, it is determined that the mobility positioning data report behavior is triggered, and then the operation S3 is performed; and if the rate variation is less than the rate variation threshold, a state of the speed change of the positioning target is continuously monitored.

Both an acceleration behavior and a deceleration behavior of the positioning target may trigger the mobility positioning data report behavior. In some embodiments, a redirection behavior of the positioning target may also trigger the mobility positioning data report behavior.

The positioning method provided by the embodiment of the present disclosure can be used to determine the mobility of the positioning target according to the speed change of the positioning target, and determine whether to report the positioning data of the positioning target, thereby realizing the reasonable utilization of the bandwidth resources and the processing resources while ensuring the sufficiency and the timeliness of the positioning data, and allowing the data timeliness to be compatible with the platform resources.

FIG. 8 is another flowchart illustrating a positioning method according to an embodiment of the present disclosure. As shown in FIG. 8, the positioning method is applied to a positioning platform side (for example, the positioning method is performed by a positioning platform), and includes operations S4 to S6.

In operation S4, a mobility positioning data report request is configured and generated.

Data report trigger policy information corresponding to a positioning target is recorded in the mobility positioning data report request.

In some embodiments, the positioning platform acquires normal state information of the positioning target, and the normal state information includes a static state or a motion state; and a configuration information template of request may be acquired according to the normal state information of the positioning target, and then the mobility positioning data report request may be configured and generated. For example, for the positioning target whose normal state is the static state, it is set that reporting of the positioning data is triggered by monitoring a distance between the positioning target and an absolute reference position; and for the positioning target whose normal state is the motion state, it is set that the reporting of the positioning data is triggered by monitoring a speed change of the positioning target.

In some embodiments, the positioning platform acquires scenario information of the positioning target, and may acquire the configuration information template of request according to the scenario information and configure and generate the mobility positioning data report request. For example, the scenario information may include: an indoor scenario and an outdoor scenario.

In operation S5, the mobility positioning data report request is sent to an edge computing platform.

In the operation S5, the mobility positioning data report request is sent to the edge computing platform, so as to allow the edge computing platform to determine whether to trigger a mobility positioning data report behavior according to the data report trigger policy information, and report the positioning data of the positioning target when it is determined that the mobility positioning data report behavior is triggered.

In operation S6, the positioning data is received.

In some embodiments, the data report trigger policy information includes a reference position and a position change type, the reference position includes an absolute reference position of the positioning target, and the position change type includes: an absolute position change type; and the reference position and the position change type are configured to instruct the edge computing platform to detect whether a position change of the positioning target occurs according to the absolute reference position, which corresponds to the operation S201. Further, in some embodiments, the data report trigger policy information includes a position change measurement mode and a report trigger threshold, the position change measurement mode includes: a ranging mode, and the report trigger threshold includes: a distance threshold; and the position change measurement mode and the report trigger threshold are configured to instruct the edge computing platform to acquire a distance between the positioning target and the absolute reference position based on the ranging mode, and detect whether the position change of the positioning target occurs according to a relation between the magnitude of the acquired distance and the magnitude of the distance threshold, which corresponds to the operation S2011 and the operation S2012.

Or, in some embodiments, the data report trigger policy information includes a position change type including a relative position change type; the position change type is configured to instruct the edge computing platform to acquire historical positioning data of the positioning target, determine at least one relative reference position of the positioning target according to the historical positioning data, and detect whether a position change of the positioning target occurs according to the at least one relative reference position, which corresponds to the operation S202 and the operation S203. Further, in some embodiments, the data report trigger policy information further includes a position change measurement mode and a report trigger threshold, the position change measurement mode includes a ranging mode, and the report trigger threshold includes a distance threshold; and the position change measurement mode and the report trigger threshold are configured to instruct the edge computing platform to acquire a distance between the positioning target and each relative reference position based on the ranging mode, and detect whether the position change of positioning target occurs according to a relation between the magnitude of each acquired distance and the magnitude of the distance threshold.

Or, in some embodiments, the data report trigger policy information includes a trigger measurement mode and a report trigger threshold, the trigger measurement mode includes a speed measurement mode, and the report trigger threshold includes a rate variation threshold; and the trigger measurement mode and the report trigger threshold are configured to instruct the edge computing platform to obtain, based on the speed measurement mode, a rate of the positioning target every preset time period and calculate a rate variation, and determine whether to trigger the mobility positioning data report behavior according to a relation between the magnitude of the rate variation and the magnitude of the rate variation threshold, which corresponds to the operation S2b and the operation S2c.

The positioning method provided by the embodiments of the present disclosure can be used to determine whether to report the positioning data according to the mobility of the positioning target, and send a corresponding request to the edge computing platform to realize mobility positioning of the positioning target.

An embodiment of the present disclosure provides an edge computing platform, including: one or more processors; and a storage device configured to store one or more programs. When executed by the one or more processors, the one or more programs cause the one or more processors to carry out the positioning method including the operation S1 (or the operation S01) as described in any one of the above embodiments.

An embodiment of the present disclosure provides a computer-readable medium having a computer program stored thereon. When the program is executed by a processor, the positioning method including the operation S1 (or the operation S01) as described in any one of the above embodiments is carried out.

An embodiment of the present disclosure provides a positioning platform, including: one or more processors; and a storage device configured to store one or more programs. When executed by the one or more processors, the one or more programs cause the one or more processors to carry out the positioning method including the operation S4 as described in any one of the above embodiments.

An embodiment of the present disclosure provides a computer-readable medium having a computer program stored thereon. When the program is executed by a processor, the positioning method including the operation S4 as described in any one of the above embodiments is carried out.

The embodiments of the present disclosure provide the positioning methods, the edge computing platform, the positioning platform and the computer-readable media. With the positioning method applicable to the edge computing platform, whether to trigger the mobility positioning data report behavior is determined according to the data report trigger policy information, and the positioning data is reported merely when the positioning target meets a corresponding mobility condition, thereby realizing the reasonable utilization of the bandwidth resources and the processing resources while ensuring the sufficiency and the timeliness of the positioning data, and allowing the data timeliness to be compatible with the platform resources; and with the positioning method applicable to the positioning platform, through the configuration of the mobility positioning data report request, the edge computing platform reports the positioning data based on the mobility of the positioning target, thereby ensuring the sufficiency and the timeliness of the positioning data, at least solving the problem of waste of the bandwidth resources and the processing resources, and allowing the data timeliness to be compatible with the platform resources.

It should be understood by those of ordinary skill in the art that the functional modules/units in all or some of the operations and devices disclosed in the above method may be implemented as software, firmware, hardware, or suitable combinations thereof. If implemented as hardware, the division between the functional modules/units stated above is not necessarily corresponding to the division of physical components; and for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, a Random Access Memory, a Read-Only Memory, an Electrically Erasable Programmable Read-Only Memory (EEPROM), a flash memory or other storage technology, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A positioning method, comprising:
receiving a mobility positioning data report request, with data report trigger policy information corresponding to a positioning target recorded in the mobility positioning data report request;
determining whether to trigger a mobility positioning data report behavior according to the data report trigger policy information; and
in response to determining that the mobility positioning data report behavior is triggered, reporting positioning data of the positioning target.

2. The positioning method of claim 1, wherein determining whether to trigger the mobility positioning data report behavior according to the data report trigger policy information comprises:
detecting whether a position change of the positioning target occurs according to the data report trigger policy information; and
in response to detecting that the position change of the positioning target occurs, determining that the mobility positioning data report behavior is triggered.

3. The positioning method of claim 2, wherein the data report trigger policy information comprises: a reference position and a position change type;
the reference position comprises: an absolute reference position of the positioning target, and the position change type comprises: an absolute position change type; and
detecting whether the position change of the positioning target occurs according to the data report trigger policy information comprises:
detecting whether the position change of the positioning target occurs according to the absolute reference position.

4. The positioning method of claim 3, wherein the data report trigger policy information further comprises: a position change measurement mode and a report trigger threshold;
the position change measurement mode comprises: a ranging mode, and the report trigger threshold comprises: a distance threshold; and
detecting whether the position change of the positioning target occurs according to the absolute reference position comprises:
acquiring a distance between the positioning target and the absolute reference position based on the ranging mode;
comparing the acquired distance with the distance threshold; and
in response to the acquired distance being greater than or equal to the distance threshold, detecting that the position change of the positioning target occurs.

5. The positioning method of claim 2, wherein the data report trigger policy information comprises a position change type;
the position change type comprises: a relative position change type; and
detecting whether the position change of the positioning target occurs according to the data report trigger policy information comprises:
acquiring historical positioning data of the positioning target, and determining at least one relative reference position of the positioning target according to the historical positioning data; and
detecting whether the position change of the positioning target occurs according to the at least one relative reference position.

6. The positioning method of claim 5, wherein the data report trigger policy information further comprises: a position change measurement mode and a report trigger threshold;
the position change measurement mode comprises a ranging mode, and the report trigger threshold comprises: a distance threshold; and
detecting whether the position change of the positioning target occurs according to the at least one relative reference position comprises:
acquiring a distance between the positioning target and each relative reference position based on the ranging mode;
comparing each acquired distance with the distance threshold; and
in response to any acquired distance being greater than or equal to the distance threshold, detecting that the position change of the positioning target occurs.

7. The positioning method of claim 1, wherein the data report trigger policy information comprises a trigger measurement mode and a report trigger threshold;
the trigger measurement mode comprises: a speed measurement mode, and the report trigger threshold comprises: a rate variation threshold;
determining whether to trigger the mobility positioning data report behavior according to the data report trigger policy information comprises:
based on the speed measurement mode, acquiring a rate of the positioning target every preset time period, and calculating a rate variation;
comparing the rate variation with the rate variation threshold; and
in response to the rate variation being greater than or equal to the rate variation threshold, determining that the mobility positioning data report behavior is triggered.

8. A positioning method, comprising:
configuring and generating a mobility positioning data report request, with data report trigger policy information corresponding to a positioning target recorded in the mobility positioning data report request;
sending the mobility positioning data report request to an edge computing platform, so as to allow the edge computing platform to determine whether to trigger a mobility positioning data report behavior according to the data report trigger policy information, and report positioning data of the positioning target in response to determining that the mobility positioning data report behavior is triggered; and
receiving the positioning data.

9. An edge computing platform, comprising:
one or more processors; and
a storage device configured to store one or more programs;
when executed by the one or more processors, the one or more programs cause the one or more processors to carry out the positioning method of any one of claims 1 to 7.

10. A positioning platform, comprising:
one or more processors; and
a storage device configured to store one or more programs;
when executed by the one or more processors, the one or more programs cause the one or more processors to carry out the positioning method of claim 8.

11. A computer-readable medium having a computer program stored thereon which, when executed by a processor, causes the processor to perform the positioning method of any one of claims 1 to 7.

12. A computer-readable medium having a computer program stored thereon which, when executed by a processor, causes the processor to perform the positioning method of claim 8.
